# EUROPEAN PATENT SPECIFICATION

(11) **EP 3 141 419 B1**
(45) Date of publication and mention of the grant of the patent: **06.11.2019**
(21) Application number: 15184387.7
(22) Date of filing: 09.09.2015
(51) Int. Cl.: B60N 2/62, B60N 2/02, B60N 2/90

(54) **A VEHICLE SEAT**
FAHRZEUGSITZ
SIÈGE DE VÉHICULE

(43) Date of publication of application: 15.03.2017
(73) Proprietor: Volvo Car Corporation, 40 531 Göteborg (SE)
(72) Inventor: Lundgren, Patrik, 42351 Torslanda (SE); Alexandersson, Peter, 434 97 Kungsbacka (SE)
(74) Representative: Valea AB

(56) References cited:
- DE-A1-102007 010 158
- FR-A3- 2 896 200
- GB-A- 2 403 139
- US-A- 5 647 635

## Description

### TECHNICAL FIELD

A vehicle seat having a seat extension enabling the seat portion of the vehicle seat to be extended in length and/or width. The vehicle seat may thus be adjusted to the specific needs of a user.

### BACKGROUND

It has always been a difficult task within the vehicle industry to provide vehicle seats which are comfortable to all users. Adjustable vehicle seats are therefore almost a necessity in a modern vehicle. Adjustable vehicle seats are common and there are a wide variety of different solutions to adjust the vehicle seat.

One solution to adjust the length of the seating portion on the vehicle seat is presented in the patent publication US patent no. US8167370 B2 which discloses a seat cushion adjusting apparatus comprising an outer shape having an inner member and a movement mechanism. The front end portion extends downwardly from a front edge of the seating portion while being wrapped on a drum surface portion of so as to extend along the flat surface of the drum. The front end portion is moved in accordance with a movement of the drum to adjust an outer shape of the seating member. When the drum is rotated in a counterclockwise direction it can be retracted toward the rear side of the seat and curves the deformable portion.

A second solution is presented in the US patent no. US8016355 B2 which discloses a seat cushion adjusting apparatus wherein an adjusting lever moves the end portion of the seat member by rotating an adjusting member around an axis in the front or rear direction of the seat relative to the supporting member. In one embodiment the drum is rotated by an operation, a swinging movement, of the adjusting lever whose ends are respectively rotatably connected at the base member and the drum.

Both these solutions provide adjustment capabilities and enable an adjustable length of the seating portion but lack the capability to be removed if not used. They require a relatively complex mechanism to operate.

A third solution is presented in the German publication No. DE 10 2007 010158 A1. The document discloses a solution in which a separate cushion is pivotally arranged to a seat. The separate cushion is further pivotably displaceable to a position underneath the seat.

### SUMMARY

It is an object of the present invention to remove, or at least reduce some of the draw backs of the prior art, or to provide for a useful alternative. The objects are at least partly met by a vehicle seat according to claim 1

The seat extension may be snugly fitted to the seat portion and can be removed if not used, providing a very versatile vehicle seat adaptable to people of different lengths and sizes.

The seat extension can be displaced between an operative position at which the seat extension adds to the length of the first sit surface of the seat portion and an inoperative position at which the seat extension does not add to the length of the first sit surface of the seat portion. If the seat extension is adapted to add to the width of the seat portion the seat extension can be displaced between an operative position at which the seat extension adds to the width of the first sit surface of the seat portion and an inoperative position at which the seat extension does not add to the width of the first sit surface of the seat portion.

The vehicle seat may be provided with one or more seat extensions. The vehicle seat may thus be provided with a seat extension to increase the length of the sit surface seat portion and/or with one or more seat extension to increase the width of the sit surface of the seat portion.

If the seat portion and the seat extension when being in the operative position define a standard seat area, the seat extension when displaced to the inoperative position reduces the seat length and/or width. However, the seat portion adapted to cooperate with the seat extension is nevertheless increased as the seat extension is displaced back to its operative position.

The seat extension may be adapted to support a user's legs selectively between the knees and the hips and/or between the knees and the feet of the user, dependent on position and rotation angle.

The seat extension may be pivotally connected to the seat portion at a pivot connection. The pivot connection can be formed by one or more brackets e.g. made of sheet steel or composite material.

The seat extension can be positioned in the inoperative position by being pivoted to a position substantially underneath the seat portion. The seat extension may thus be removed and does not add to the sit surface of the seat portion at all in this position. This provides a very versatile vehicle seat which can be adapted to a large variety of people of different lengths and sizes.

The seat extension may have an unsymmetrical cross section. When rotating the seat extension a suitable length or width may be provided to add to the sit surface.

One way of provide a versatile vehicle seat is that the seat extension has a center point with respect to the cross section of the seat extension, wherein the first axis is displaced from the center point of the seat extension. This can assist to provide a range of different length or width to the sit surface of the seat portion.

The seat extension may have a substantially oval cross section, or an oval cross section.

The vehicle seat may comprise a lock mechanism to retain the seat extension in an operative position. The seat extension can be locked at the operative position by a lock mechanism. The lock mechanism may be adapted to unlock the seat extension by displacing the seat extension to an end point of an available displacement distance, permitting the seat extension to be displaced to the inoperative positon. A user may thus simply grab about the seat extension and pivot the seat extension to the end point whereby the lock mechanism unlocks the seat extension so that the seat extension may be displaced to the inoperative position. The end point is generally slightly higher up than a plane formed by the sit surface of the seat portion. This reduced the chance that a user accidentally unlocks the seat extension from the operative position.

The vehicle seat may comprise one, two, three, four or more seat extensions as described herein. It may be advantageous to have two seat extensions to increase the available length and the available width of the seat portion. Additionally or optionally, the vehicle seat may be provided with a seat extension as described herein on either side of the seat portion to increase the available width of the seat portion in two directions. Optionally both the length and the width in either direction may be increased; such seat has three seat extensions.

The vehicle seat may be provided with one or more electrical motors. The one or more electrical motors may be arranged to rotate the seat extension for example and/or to pivot the seat extension between the operative position and the inoperative positon.

The seat extension may be positioned directly adjacent the seat portion of the vehicle seat. In this sense it may be a no-gap seat extension to the main cushion, i.e. the seat portion. As the seat extension is a separate component with respect to the seat portion of the vehicle seat, the seat extension may rotate and be displaced between the operative and inoperative positions without affecting the seat portion of the vehicle seat.

The seat extension when arranged to increase the length of the seat portion, preferably follows the shape of the seat portions side in terms of that it does not protrude on the side. The width of the seat extension may thus be substantially equal to, or equal to, the width of the seat portion of the vehicle seat. The width of the seat extension is preferably at least 90 %, preferably 95 %, of the width of the seat portion. The width of the seat extension may be 90-110 % of the width of the seat portion, preferably 95-105 % of the width of the seat portion.

The cross section of the seat extension may be described as being oval or elliptic, and preferably with the rotation axis displaced from the center of the shape. Suitable shapes are Cartesian ovals, Cassini ovals, or ovals with only one axis of symmetry (egg shaped) for example.

The vehicle seat provides a comfortable vehicle seat which has relatively few components and is user friendly.

### BRIEF DESCRIPTION OF THE DRAWINGS

Non-limiting embodiments of the present invention will be described in greater detail with reference to the accompanying figures in which;
figure 1 shows a vehicle seat having a separate seat extension;
figure 2 shows the vehicle seat of figure 1 with a cross sectional view along line A-A; figures 3a-3c show cross sections of the vehicle seat with the seat extension in the operative positon and rotated to different positions to increase the available length of the seat portion of the vehicle seat;
figure 4 shows a schematic illustration of the seat and the seat extension with the seat extension rotatable in a step-wise manner;
figure 5 shows the cross section of the seat extension in greater detail and;
figure 6 shows the seat extension displaced along a vertical line to an inoperative positon, or a semi-inoperative position.

### DETAILED DESCRIPTION OF PREFERRED EMBODIMENTS

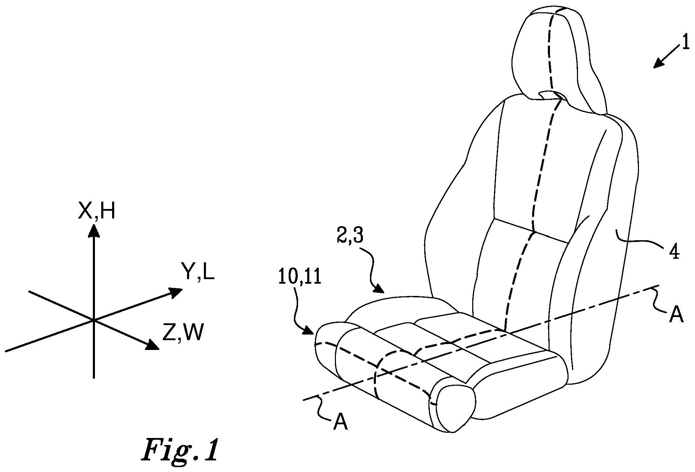

Figure 1 shows a vehicle seat 1 for a vehicle such as an automobile, truck, recreational vehicle (RV), boat, buss or the like. The vehicle seat 1 comprises a seat portion 2 with a first sit surface 3 on which a user sits on during use and a back rest portion 4 onto which a user may rest his or hers back during use. The seat portion 2 comprises a seat extension 10 having a second sit surface 11 adapted to extend the total available sit surface of the vehicle seat 1. The seat extension 10 is a separate member with respect to the seat portion 2.

For the purpose of orientation, the vehicle seat has a width W corresponding to a Z axis, a length L corresponding to a Y axis, and a height H corresponding to an X axis. The axes are indicated on the vehicle seat 1 by the dashed lines.

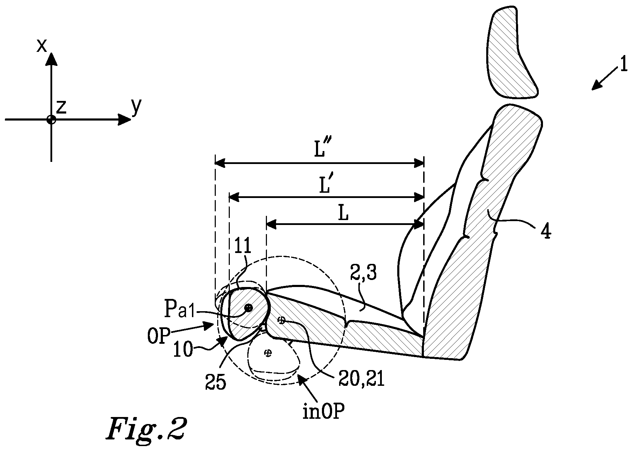

Figure 2 shows the vehicle seat 1 of figure 1 with a cross sectional view along the line A-A. Figure 2 shows the seat portion 2, the back rest portion 4 and the extension portion 10. The extension portion 10 has a first axis Pa1 about which the extension portion may rotate. The first axis Pas 1 is when viewed as shown in figure 2 parallel with the z axis and the width of the vehicle seat 1 and the seat portion 2. The available surface for a user when sitting on the seat portion may be increased. As is shown in figure 2, the length L of the seat portion 2 may be extended by the seat extension 10. To illustrate the extended length of the seat portion, the arrows L, L', L" is used. Without the seat extension 10, the seat portion 2 has a length L, when the seat extension 10 is used the available length to sit on is extended to L'. As the seat extension 10 may be rotated about the first axis Pa1, the available length to sit on may be even further extended to L". As the available length of the seat portion 2 can be extended, the seat portion may be adapted to users of different length, i.e. having different leg length generally between the hips and the knees of a user, providing a comfortable sit position.

The seat extension 10 may be displaced between an operative position OP, as shown in figure 2 and in inoperative position as indicated in figure 2 with the arrow inOP. In the operative position, the seat extension 10 extends at least the length L of the seat portion. In the inoperative position, the seat extension 10 extends the available length L', L" of the seat portion 2, and may be rotated to extend the length L', L" of the seat portion 2 to different lengths dependent on the position of the seat extension 10.

The seat extension 10 is displaceably suspended, or displaceably connected to, the seat portion 2. In the shown embodiment, the seat extension 10 is pivotally connected to the seat portion 2 at a pivot connection 20. The seat extension 10 can thus be pivoted between the operative position OP and the inoperative position inOP by pivoting the seat extension 10. The pivot connection 20 has a second axis 21, connected to the seat portion 2 e.g. via a shaft, about which the seat extension can pivot. When the seat extension is in the operative position OP, the position is retained at that position by a lock mechanism.

The vehicle seat 1 may be provided with different lock mechanisms to provide this function. One feature of such lock mechanism may be that to displace the seat extension 10 back to the inoperative position, the seat extension 10 is further displaced in the clock-wise direction to the upper most position, where after the seat extension 10 may be displaced to the inoperative position inOP. The lock mechanism of the rotation function of the seat extension 10 may operate in the same manner. This reduces the need for separate handles for these functions which saves space around the vehicle seat 1.

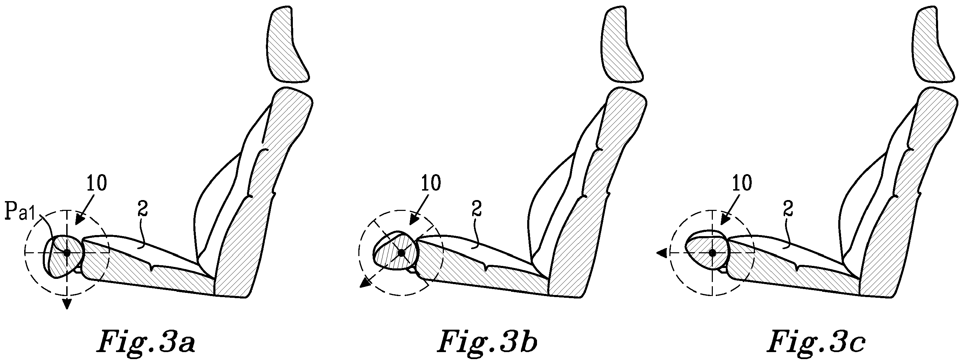

Figures 3a-3c shows the cross section of figure 2 but with the seat extension 10 in the operative position and with different added length of the seat portion 2 as a function of the rotation of the seat extension. As can be noticed, the cross section of the seat extension 10 has a substantially oval shape with the fist axis Pa1 slightly offset with respect to a center point of the cross section. As the seat extension 10 is rotated clock-wise the length of the seat portion 2, i.e. the available length to sit on for a use, is increased. In the shown embodiment the seat extension 10 is rotated 90 degrees as indicated by the angle indication cross in figures 3a-3c. The seat extension is adapted to rotate from 0-180 degrees, preferably from 0-135 degrees, more preferably from 0-90 degrees. The angle can be measured as shown in figures 3a-3c.

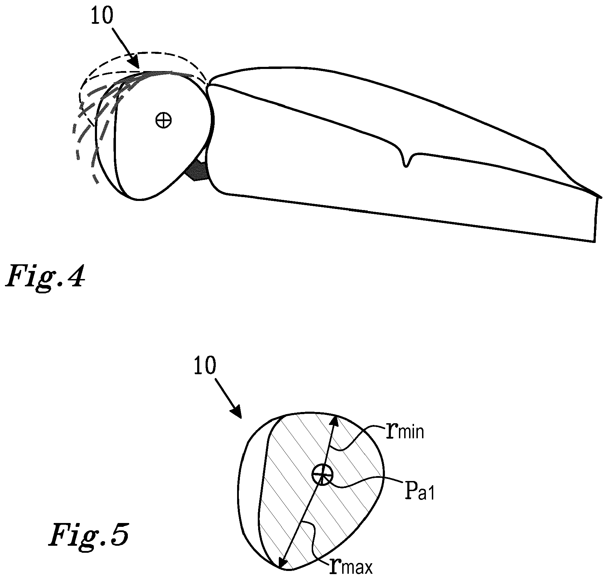

The seat extension may be rotated step wise or continuously. It has been found that a step wise rotation of the seat extension requires a simpler mechanical mechanism and is thus favorable from a manufacturing point of view. A suitable step wise rotation is 0.1-15 degrees per step, preferably 0.1-10 degrees per step, more preferably 0.1-5 degrees per step. A step wise rotation of the seat extension 10 is illustrated by the dashed lines in figure 4.

With reference again to figures 3a-3c, the seat extension 10 is positioned to snugly fit against the seat portion 2 so that no, or substantially no, space is between them even though the seat extension 10 is a separate member with respect to the seat portion 2. The seat extension 10 is positioned adjacent the seat portion. A portion of the cross section of the seat extension 10 has a circular form to better fit against the seat portion 2. The part which is adjacent, or substantially adjacent, is preferably formed with a circular shape so that during rotation of the seat extension, no gap is formed between the seat extension and the seat portion. The arc angle is preferably 90 degrees, or about 90 degrees. The general shape of the cross section of the seat extension 10 when viewed as shown in figures 2, 3a-3c, can be described as a cross section having varying radii.

Figure 5 shows the cross section of the seat extension 10 in greater detail. The cross section has a max radii rₘₐₓ, and a minimum radii rₘᵢₙ. The maximum radii rₘₐₓ is preferably from 3-20 cm, and the minimum radii rₘᵢₙ is preferably from 1-10 cm. It should be noted of course that the minimum radii rₘᵢₙ of course cannot be larger than the maximum radii rₘₐₓ, it is preferably at least 10 % smaller, e.g. 10-50 % smaller, than the maximum radii rₘₐₓ. The cross section of the seat extension 10 may thus be described as being oval or elliptic, and with the rotation axis displaced from the center of the shape. Suitable shapes are Cartesian ovals, Cassini ovals, or an oval with only one axis of symmetry (egg shaped) for example.

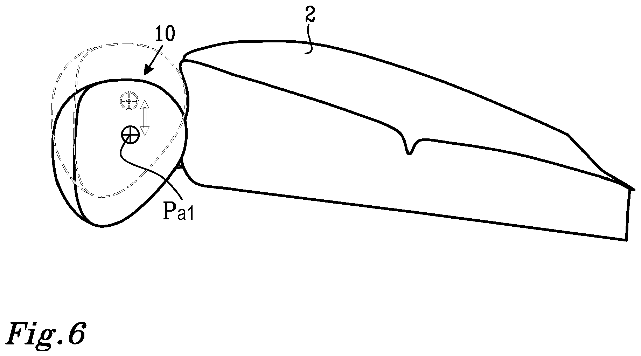

Figure 6 shows an embodiment of the seat portion 2 and the seat extension 10. In this embodiment, the seat extension 10 has be displaced to an inoperative position by displacing the seat extension 10 substantially along a vertical line as illustrated in figure 6 by the arrow. A suitable vertical displacement is about 5-15 cm. It has been found that the relatively small displacement of the seat extension 10, and preferably in the vertical direction when viewed as shown in figure 6, is enough to remove the seat extension 10 from an operative position. It is not excluded that a user may feel, or be tangent to, the seat extension when it is positioned in the inoperative position, but it does not support the position of the legs between the knees and the hips of the user to the extent which a seat extension and a leg support is intended to do to provide a comfortable and relaxed position. In this sense it can be said that the seat extension may actually be positioned in a semi inoperative position, this can be done in combination with an inoperative position as described above, or only as a semi inoperative position. Preferably, and as can be noticed, the seat extension 10 is still positioned with a snugly fit adjacent to the seat portion, even in the inoperative position.

It should be noted that the width W of the seat portion may be extended in the same manner as described herein by adapting the seat extension 10 to extend the width W of the seat portion instead. As can be noted in figure 2, the seat extension if suspended using at least one bracket 25, in this case two brackets (only one shown in figure 2) pivotally connected to the seat portion. In a similar manner but with the brackets oriented perpendicular to the brackets of figure 2, a seat extension 10 may be positioned to increase the width W of the seat portion.

It is of course possible that both the length and the width of the seat portion 2 may be extended in this manner. The width W may also be extended in this manner on both sides of the center line.

## Claims

1. A vehicle seat (1) comprising a seat portion (2) having a first sit surface (3) with a length (L) and a width (W), said vehicle seat (1) further comprising a seat extension (10) having a second sit surface (11), said seat extension (10) being adapted to increase said length (L', L") or width of said first sit surface (3) of said seat portion (2) upon rotating about a first axis (Pa1),
said seat extension (10) being formed by a separate body with respect to said seat portion (2)
**characterized in that**
said seat extension (10) can be displaced between an operative position (OP) at which said seat extension (10) adds to said length (L) of said first sit surface (3) of said seat portion (2), and an inoperative position (inOP) or semi-inoperative position, wherein said seat extension (10) is displaced to said inoperative position by displacing said seat extension (10) substantially only in a vertical direction.

2. The vehicle seat (1) according to claim 1, wherein said vertical displacement is about 5-15 cm.

3. The vehicle seat (1) according to claim 1, wherein said seat extension (10) can be displaced between an operative position (OP) at which said seat extension (10) adds to said length (L) of said first sit surface (3) of said seat portion (2), and an inoperative position (inOP) at which said seat extension (10) does not add to said length (L) of said first sit surface (3) of said seat portion (2).

4. The vehicle seat according to claim 3, wherein said seat extension (10) is pivotally connected to said seat portion (2) at a pivot connection (20).

5. The vehicle seat according to claim 4, wherein said seat extension (10) can be positioned in said inoperative position (inOP) by being pivoted to a position substantially underneath, or underneath, said seat portion (2).

6. The vehicle seat according to any one of the preceding claims, wherein said seat extension (2) has an unsymmetrical cross section.

7. The vehicle seat according to any one of the preceding claims, wherein said seat extension (10) has a centre point with respect to the cross section of the seat extension (10), wherein said first axis (Pa1) is displaced from said centre point of said seat extension (10).

8. The vehicle seat according to any one of the preceding claims, wherein said seat extension has a substantially oval cross section, or an oval cross section.

9. The vehicle seat according to any one of the preceding claims, wherein said seat extension (10) can be locked at said operative position (OP) by a lock mechanism.

10. The vehicle seat according to claim 9, wherein said lock mechanism is adapted to unlock said seat extension (10) by displacing said seat extension (10) to an end point of an available displacement distance, permitting said seat extension (10) to be displaced to said inoperative positon (inOP).

11. The vehicle seat according to claim 9, wherein said lock mechanism unlocked by a rotational motion of said seat extension (10) in the same direction which a user intends to rotate said seat extension (10).

12. The vehicle seat according to any one of the preceding claims, wherein said vehicle seat (1) comprises two or more seat extensions.

13. The vehicle seat according to any one of the preceding claims, wherein said seat extension (10) is adapted to rotate in a step-wise manner.

14. The vehicle seat according to any one of the preceding claims, wherein said seat extension (10) is adapted to support a user's leg between the knees and the feet of the user dependent on rotation and/or position.

## Patentansprüche

1. Fahrzeugsitz (1), umfassend einen Sitzteil (2), der eine erste Sitzfläche (3) mit einer Länge (L) und einer Breite (W) aufweist, wobei der Fahrzeugsitz (1) ferner eine Sitzverlängerung (10) umfasst, die eine zweite Sitzfläche (11) aufweist, wobei die Sitzverlängerung (10) geeignet ist, die Länge (L', L") oder Breite der ersten Sitzfläche (3) des Sitzteils (2) bei einer Drehung um eine erste Achse (Pa1) zu vergrößern,
wobei die Sitzverlängerung (10) in Bezug auf den Sitzteil (2) durch einen separaten Körper gebildet ist,
**dadurch gekennzeichnet, dass**
die Sitzverlängerung (10) zwischen einer Betriebsstellung (OP), in der die Sitzverlängerung (10) die Länge (L) der ersten Sitzfläche (3) des Sitzteils (2) vergrößert, und einer Ruhestellung (inOP) oder Halbruhestellung verlagert werden kann, wobei die Sitzverlängerung (10) dadurch in die Ruhestellung verlagert wird, dass die Sitzverlängerung (10) im Wesentlichen nur in einer vertikalen Richtung verlagert wird.

2. Fahrzeugsitz (1) nach Anspruch 1, wobei die vertikale Verlagerung ca. 5-15 cm beträgt.

3. Fahrzeugsitz (1) nach Anspruch 1, wobei die Sitzverlängerung (10) zwischen einer Betriebsstellung (OP), in der die Sitzverlängerung (10) die Länge (L) der ersten Sitzfläche (3) des Sitzteils (2) vergrößert, und einer Ruhestellung (inOP), in der die Sitzverlängerung (10) die Länge (L) der ersten Sitzfläche (3) des Sitzteils (2) nicht vergrößert, verlagert werden kann.

4. Fahrzeugsitz nach Anspruch 3, wobei die Sitzverlängerung (10) an einer Drehverbindung (20) auf drehbare Weise mit dem Sitzteil (2) verbunden ist.

5. Fahrzeugsitz nach Anspruch 4, wobei die Sitzverlängerung (10) in der Ruhestellung (inOP) positioniert werden kann, indem sie in eine Stellung gedreht wird, die im Wesentlichen unter oder unter dem Sitzteil (2) liegt.

6. Fahrzeugsitz nach einem der vorhergehenden Ansprüche, wobei die Sitzverlängerung (2) einen unsymmetrischen Querschnitt aufweist.

7. Fahrzeugsitz nach einem der vorhergehenden Ansprüche, wobei die Sitzverlängerung (10) in Bezug auf den Querschnitt der Sitzverlängerung (10) einen Mittelpunkt aufweist, wobei die erste Achse (Pa1) von dem Mittelpunkt der Sitzverlängerung (10) weg verlagert wird.

8. Fahrzeugsitz nach einem der vorhergehenden Ansprüche, wobei die Sitzverlängerung einen im Wesentlichen ovalen Querschnitt oder einen ovalen Querschnitt aufweist.

9. Fahrzeugsitz nach einem der vorhergehenden Ansprüche, wobei die Sitzverlängerung (10) durch einen Verriegelungsmechanismus in der Betriebsstellung (OP) verriegelt werden kann.

10. Fahrzeugsitz nach Anspruch 9, wobei der Verriegelungsmechanismus geeignet ist, die Sitzverlängerung (10) durch Verlagern der Sitzverlängerung (10) zu einem Endpunkt eines zur Verfügung stehenden Verlagerungsabstands zu entriegeln, wodurch ermöglicht wird, dass die Sitzverlängerung (10) in die Ruhestellung (inOP) verlagert wird.

11. Fahrzeugsitz nach Anspruch 9, wobei der Verriegelungsmechanismus durch eine Drehbewegung der Sitzverlängerung (10) in der gleichen Richtung, in der ein Benutzer beabsichtigt, die Sitzverlängerung (10) zu drehen, entriegelt wird.

12. Fahrzeugsitz nach einem der vorhergehenden Ansprüche, wobei der Fahrzeugsitz (1) zwei oder mehrere Sitzverlängerungen umfasst.

13. Fahrzeugsitz nach einem der vorhergehenden Ansprüche, wobei die Sitzverlängerung (10) geeignet ist, sich stufenweise zu drehen.

14. Fahrzeugsitz nach einem der vorhergehenden Ansprüche, wobei die Sitzverlängerung (10) geeignet ist, abhängig von der Drehung und/oder Stellung die Beine eines Benutzers zwischen den Knien und den Füßen des Benutzers zu stützen.

## Revendications

1. Siège de véhicule (1) comprenant une partie de siège (2) ayant une première surface d'assise (3) ayant une longueur (L) et une largeur (W), ledit siège de véhicule (1) comprenant en outre une extension de siège (10) ayant une seconde surface d'assise (11), ladite extension de siège (10) étant conçue pour augmenter ladite longueur (L', L'') ou largeur de ladite première surface d'assise (3) de ladite partie de siège (2) lors de la rotation autour d'un premier axe (Pa1),
ladite extension de siège (10) étant formée par un corps séparé par rapport à ladite partie de siège (2)
**caractérisé en ce que**
ladite extension de siège (10) peut être déplacée entre une position active (OP) au niveau de laquelle ladite extension de siège (10) ajoute à ladite longueur (L) de ladite première surface d'assise (3) de ladite partie de siège (2), et une position inactive (inOP) ou semi-inactive, ladite extension de siège (10) étant déplacée vers ladite position inactive en déplaçant ladite extension de siège (10) sensiblement uniquement dans une direction verticale.

2. Siège de véhicule (1) selon la revendication 1, ledit déplacement vertical étant d'environ 5 à 15 cm.

3. Siège de véhicule (1) selon la revendication 1, ladite extension de siège (10) pouvant être déplacée entre une position active (OP) à laquelle ladite extension de siège (10) ajoute à ladite longueur (L) de ladite première surface d'assise (3) de ladite partie de siège (2), et une position inactive (inOP) à laquelle ladite extension de siège (10) n'ajoute pas à ladite longueur (L) de ladite première surface d'assise (3) de ladite partie de siège (2).

4. Siège de véhicule selon la revendication 3, ladite extension de siège (10) étant reliée de manière pivotante à ladite partie de siège (2) au niveau d'une liaison pivotante (20).

5. Siège de véhicule selon la revendication 4, ladite extension de siège (10) pouvant être positionnée dans ladite position inactive (inOP) en étant pivotée à une position sensiblement en dessous, ou en dessous, de ladite partie de siège (2).

6. Siège de véhicule selon l'une quelconque des revendications précédentes, ladite extension de siège (2) ayant une section transversale non symétrique.

7. Siège de véhicule selon l'une quelconque des revendications précédentes, ladite extension de siège (10) ayant un point central par rapport à la section transversale de l'extension de siège (10), ledit premier axe (Pa1) étant déplacé à partir dudit point central de ladite extension de siège (10).

8. Siège de véhicule selon l'une quelconque des revendications précédentes, ladite extension de siège ayant une section transversale sensiblement ovale, ou une section transversale ovale.

9. Siège de véhicule selon l'une quelconque des revendications précédentes, ladite extension de siège (10) pouvant être verrouillée dans ladite position active (OP) par un mécanisme de verrouillage.

10. Siège de véhicule selon la revendication 9, ledit mécanisme de verrouillage étant conçu pour déverrouiller ladite extension de siège (10) en déplaçant ladite extension de siège (10) jusqu'à un point final d'une distance de déplacement disponible, permettant à ladite extension de siège (10) d'être déplacée dans ladite position inactive (inOP).

11. Siège de véhicule selon la revendication 9, ledit mécanisme de verrouillage étant déverrouillé par un mouvement de rotation de ladite extension de siège (10) dans la même direction que celle dans laquelle un utilisateur a l'intention de faire tourner ladite extension de siège (10).

12. Siège de véhicule selon l'une quelconque des revendications précédentes, ledit siège de véhicule (1) comprenant au moins deux extensions de siège.

13. Siège de véhicule selon l'une quelconque des revendications précédentes, ladite extension de siège (10) étant conçue pour tourner par étapes.

14. Siège de véhicule selon l'une quelconque des revendications précédentes, ladite extension de siège (10) étant conçue pour supporter une jambe d'un utilisateur entre le genou et le pied de l'utilisateur en fonction de la rotation et/ou de la position.
